# EUROPÄISCHE PATENTSCHRIFT

(11) **EP 3 431 668 B1**
(45) Veröffentlichungstag und Bekanntmachung des Hinweises auf die Patenterteilung: **16.10.2019**
(21) Anmeldenummer: 17181705.9
(22) Anmeldetag: 17.07.2017
(51) Int. Cl.: E02F 3/34, A01D 87/00, E02F 3/627

(54) **FRONTLADER UND FRONTLADER-TEILVERKLEIDUNG**
FRONT LOADER AND FRONT LOADER PART CLADDING
CHARGEUR AVANT ET HABILLAGE PARTIEL DE CHARGEUR AVANT

(43) Veröffentlichungstag der Anmeldung: 23.01.2019
(73) Patentinhaber: Wilhelm Stoll Maschinenfabrik GmbH, 38268 Lengede/Broistedt (DE)
(72) Erfinder: Hanusch, Thomas, 38855 Wernigerode (DE)
(74) Vertreter: REHBERG HÜPPE + PARTNER

(56) Entgegenhaltungen:
- WO-A1-2006/036105
- US-A- 3 447 708
- US-A- 3 722 724
- US-A- 3 848 749
- US-A- 5 405 237

## Beschreibung

### TECHNISCHES GEBIET DER ERFINDUNG

Die Erfindung betrifft einen Frontlader, über welchen ein Werkzeug wie bspw. eine Schaufel an einem Schlepper, einem Arbeitsfahrzeug, einem Traktor, einem Radlader o.ä. gehalten, angehoben, abgesenkt und verschwenkt werden kann.

### STAND DER TECHNIK

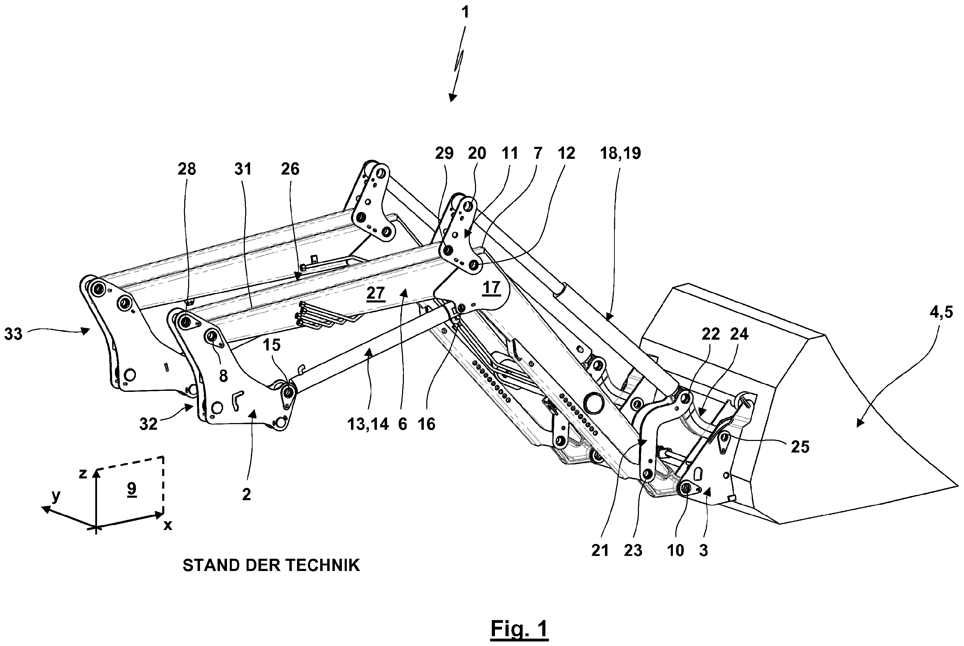

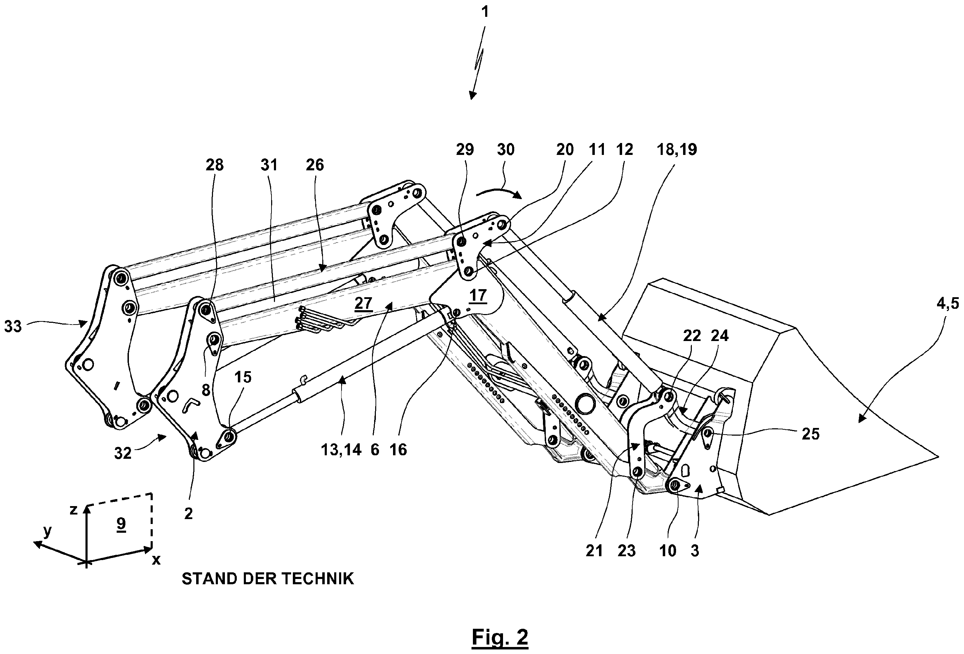

Ein gattungsgemäßer Frontlader ist beispielhaft in den Fig. 1 und 2 dargestellt ist: Der Frontlader 1 weist eine Schlepper-Kopplungseinrichtung 2 auf, die auch als "Säule" oder "Koppelsäule" bezeichnet wird. Mittels der Schlepper-Kopplungseinrichtung 2 kann der Frontlader 1 an dem Schlepper, Arbeitsfahrzeug, Traktor, Radlader o.ä. befestigt werden. Des Weiteren weist der Frontlader 1 einen Werkzeugträger 3 auf. Mittels des Werkzeugträgers 3 kann an dem Frontlader 1 ein Werkzeug 4 (für das dargestellte Ausführungsbeispiel eine Schaufel 5) befestigt werden. Der Frontlader 1 weist einen Arm 6 mit einer Abwinklung 7 oder einem Knick auf. In einem Endbereich ist der Arm 6 über ein Schwenklager 8 verschwenkbar in einer Schwenkebene 9 an der Schlepper-Kopplungseinrichtung 2 gelagert, welche in den Figuren parallel zu einer x-z-Achse orientiert ist. In dem anderen Endbereich ist der Arm 6 über ein Schwenklager 10 an dem Werkzeugträger 3 gelagert. Ein Umlenkhebel 11, der auch als Zwischenstück oder Umlenkdreieck bezeichnet werden kann, ist über ein Schwenklager 12 verschwenkbar an dem Arm 6 abgestützt. Das Schwenklager 12 ist im Bereich der Abwinklung 7 des Arms 6 angeordnet. Mittels eines Aktuators 13, der vorzugsweise als Hydraulikzylinder 14 ausgebildet ist, ist der Arm 6 relativ zu der Schlepper-Kopplungseinrichtung 2 verschwenkbar, womit der Werkzeugträger 3 und das hieran gehaltene Werkzeug 4 angehoben und abgesenkt werden können. Der Aktuator 13 ist in einem Endbereich in einem Schwenklager 15 an der Schlepper-Kopplungseinrichtung 2 gelagert, während der andere Endbereich des Aktuators 13 in einem Schwenklager 16 an dem Arm (hier mindestens einer Anlenkplatte 17 des Arms 6) gelagert ist. Ein weiterer Aktuator 18, hier ebenfalls ein Hydraulikzylinder 19, dient einer Verschwenkung des Werkzeugträgers 3 (und damit des Werkzeugs 4) relativ zu dem Arm 6. Der Aktuator 18 ist in einem Endbereich über ein Schwenklager 20 verschwenkbar an dem Umlenkhebel 11 gelagert. Der andere Endbereich des Aktuators 18 ist über eine abgewinkelte Schwinge 21 geführt. Ein Endbereich der Schwinge 21 ist über ein Schwenklager 22 an dem Endbereich des Aktuators 18 gelagert, während der andere Endbereich der Schwinge 21 über ein Schwenklager 23 an dem Arm 6 gelagert ist. Die von dem Aktuator 18 herbeigeführte Bewegung und Kraft wird über eine Koppelstange 24 auf den Werkzeugträger 3 übertragen. Die Koppelstange 24 ist in einem Endbereich ebenfalls über das Schwenklager 22 an dem Aktuator 18 gelagert, während der andere Endbereich der Koppelstange 24 über ein Schwenklager 25 an dem Werkzeugträger 3 gelagert ist. Eine Steuerstange 26, welche sich ungefähr parallel zu einem Armteil 27 des Arms 6 sowie oberhalb des Armteils 27 erstreckt, ist in einem Endbereich über ein Schwenklager 28 an der Schlepper-Kopplungseinrichtung 2 verschwenkbar gelagert, während der andere Endbereich der Steuerstange 26 über ein Schwenklager 29 an dem Umlenkhebel 11 verschwenkbar gelagert ist. Hierbei ist der Abstand des Schwenklagers 29 von dem Schwenklager 12 kleiner als der Abstand des Schwenklagers 20 von dem Schwenklager 12. Für das dargestellte Ausführungsbeispiel ist der Umlenkhebel 11 abgewinkelt ausgebildet, wobei die Schwenklager 12, 20 jeweils in einem Endbereich des abgewinkelten Umlenkhebels 11 angeordnet sind, während das Schwenklager 29 im Bereich der Abwinklung des Umlenkhebels 11 angeordnet ist. Wäre der Werkzeugträger 3 mit dem Werkzeug 4 starr und nicht verschwenkbar um das Schwenklager 10 an dem Arm 6 gelagert, hätte ein Anheben oder Absenken des Werkzeugs 4 mittels einer durch den Aktuator 13 herbeigeführten Verschwenkung des Arms 6 um das Schwenklager 8 zur Folge, dass auch das Werkzeug 4 verschwenkt würde, womit die Ausrichtung des Werkzeugs 4 zu der Umgebung, insbesondere dem Boden verändert würde, was in einigen Fällen unerwünscht ist oder mit einer unerwünschten Abhängigkeit der Schwenkbewegung des Werkzeugs 4 von der Schwenkbewegung des Arms 6 erfolgt. Angesichts der verschwenkbaren Anlenkung des Werkzeugträgers 3 an dem Arm 6 über das Schwenklager 10 erfolgt eine Vorgabe des Schwenkwinkels des Werkzeugs 4 gegenüber dem Arm 6 über die kinematische Kette, welche mit der Steuerstange 26, dem Umlenkhebel 11, dem Aktuator 18, der Schwinge 21 und der Koppelstange 24 gebildet ist. Diese kinematische Kette hat zur Folge, dass eine Verschwenkung des Arms 6 durch Ausfahren des Aktuators 13 mit einem Anheben des Endbereichs des Arms 6 im Bereich des Schwenklagers 10 gleichzeitig eine Verschwenkung des Umlenkhebels 11 in eine Schwenkrichtung 30 zur Folge hat, welche auch ohne Veränderung des Stellwegs des Aktuators 18 zur Folge hat, dass eine Verschwenkung des Werkzeugträgers 3 mit daran gehaltenem Werkzeug 4 um das Schwenklager 10 relativ zum Arm 6 erfolgt. Je nach Auslegung der kinematischen Kette kann eine Abstimmung derart erfolgen, dass unabhängig von dem Schwenkwinkel des Arms 6 gegenüber der Schlepper-Kopplungseinrichtung 2 durch Betätigung des Aktuators 13 mit einem Anheben und Absenken des Werkzeugs 4 die relative Verschwenkung des Werkzeugträgers 3 um das Schwenklager 10 relativ zu dem Arm 6 in einem Ausmaß derart erfolgt, dass sich die Ausrichtung des Werkzeugträgers 3 mit dem Werkzeug 4 nicht ändert, so dass beispielsweise ein als Hubgabel ausgebildetes Werkezeug 4 unabhängig von der Höhe desselben seine Ausrichtung gegenüber dem Boden nicht verändert, womit dann die Hubgabel parallel angehoben oder abgesenkt werden kann. Alternativ ist möglich, dass sich je nach Verschwenkung des Arms 6 eine durch die kinematischen Kette vorgegebene Abhängigkeit des Schwenkwinkels des Werkzeugs 4 von der Verschwenkung des Arms 6 und damit der Höhe des Werkzeugträgers 3 ergibt. Um lediglich ein Beispiel zu nennen, kann das als Schaufel 5 ausgebildete Werkzeug 4 bei paralleler Ausrichtung der Unterseite zu dem Boden mit einem Material gefüllt werden. Mit Verschwenkung des Arms 6 zum Anheben der Schaufel 5 kann dann entsprechend der vorgegebenen, durch die kinematische Kette beeinflussten Abhängigkeit eine geringfügige Verkippung der Schaufel 5 derart erfolgen, dass das in der Schaufel 5 angeordnete Material nicht aus der Schaufel herausfallen kann. Sämtliche genannten Bauelemente des Frontladers 1 werden parallel zu der Schwenkebene 9 oder in dieser verschwenkt oder bewegt. Die Schwenkachsen der Schwenklager 8, 10, 12, 15, 16, 20, 22, 23, 25, 28, 29 sind somit vertikal zur Schwenkebene 9 orientiert. Ein Frontlader 1 verfügt über zwei parallele Tragstrukturen 32, 33, die jeweils über eine Schlepper-Kopplungseinrichtung 2, einen Aktuator 13, einen Arm 6, eine Steuerstange 26, mindestens eine Anlenkplatte 17, einen Umlenkhebel 11, einen Aktuator 18, eine Schwinge 21 und eine Koppelstange 24 verfügen und in den den Schlepper-Kopplungseinrichtungen 2 abgewandten Endbereichen beabstandet voneinander mit dem gemeinsamen Werkzeugträger 3 verbunden sind. In den beiden Tragstrukturen 32, 33 werden die Aktuatoren 13, 18 fluidisch gleich beaufschlagt. In den Figuren sind zur Vereinfachung der Darstellung lediglich die Bauelemente der Tragstruktur 32 mit Bezugszeichen und Bezugslinien gekennzeichnet, während das Entsprechende für die Bauelemente der Tragstruktur 33 gilt. Hinsichtlich eines derartigen gattungsgemäßen Frontladers wird beispielhaft auch auf die Druckschrift EP 1 903 147 B1 oder US 5,405,237 A hingewiesen.

Wie in den Fig. 1 und 2 zu erkennen ist, ist zwischen der Unterseite der Steuerstange 26 und der Oberseite des Arms 6 ein Zwischenraum 31 ausgebildet, dessen Höhe von der Betätigung des Aktuators 13 und der Verschwenkung des Arms 6 (ohne Betätigung des Aktuators 18) abhängig ist.

Die Druckschrift EP 1 799 917 B1 schlägt vor, eine Steuerstange 26 einzusetzen, welche einen nach unten offenen, U-förmigen Querschnitt aufweist. Die Seitenschenkel des U-förmigen Querschnitts überlappen seitlich mit dem Arm 6, so dass der Arm 6 in einem von dem U-förmigen Querschnitt begrenzten Aufnahmeraum angeordnet ist. Auf diese Weise kann ein seitlich offener Zwischenraum 31 zwischen der Steuerstange 26 und dem Arm 6 vermieden werden, womit wiederum vermieden werden kann, dass in einem Zwischenraum 31 zwischen der Steuerstange 26 und dem Arm 6 Verschmutzungen abgelagert werden, die das optische Erscheinungsbild des Frontladers 1 beeinträchtigen.

Die nicht gattungsgemäße Druckschrift US 3,848,749 A offenbart einen manuell über einen Handhebel betätigten, galgenartigen Hubkran, der für einen Einsatz bei der Herstellung von Automobilen, nämlich für ein Anheben und Absenken zum Handhaben von Teilen des Automobils im Rahmen der Montage, bestimmt ist. Der Hubkran verfügt über einen U-förmigen, parallel zum Boden orientierten Grundträger, der mit Rollen auf dem Boden aufsteht und von dem sich vertikal eine Tragsäule nach oben erstreckt. An der Tragsäule ist in dem oberen Endbereich ein Endbereich eines Querträgers verschwenkbar angelenkt. In dem anderen Endbereich ist an dem Querträger verschwenkbar eine Trageinheit angelenkt, die einen Haken trägt, an welchem ein Seil oder eine Kette zum Aufhängen des Teils des Automobils getragen ist, und auf deren Oberseite eine Befestigungseinrichtung beispielsweise für ein Getriebe des Automobils angeordnet ist. Ein Anheben und Absenken des Querträgers (und damit ein Anheben und Absenken des Teils des Automobils) erfolgt über eine Verschwenkung des Querträgers um dessen Schwenklager an der Tragsäule. Diese Verschwenkung wird herbeigeführt über einen hydraulischen Hubzylinder, dessen einer Endbereich an der Tragsäule abgestützt ist, während der andere Endbereich an dem Querträger abgestützt ist. Der Hydraulikdruck und das Hydraulikvolumen in dem hydraulischen Hubzylinder können manuell über den Handhebel und eine hiermit verbundene Hydraulikpumpe verändert werden. Um unabhängig von dem Schwenkwinkel des Querträgers eine funktional bedingte horizontale Ausrichtung der Trageinheit zu gewährleisten, findet eine Parallelführung Einsatz. Die Parallelführung weist eine Führungsstange auf, die (bei paralleler Ausrichtung zu dem Querträger) in einem Endbereich an der Tragsäule und in dem anderen Endbereich an der Trageinheit angelenkt ist. Um zu vermeiden, dass eine Hand oder ein Finger des Benutzers bei der manuellen Betätigung des Hubkrans in dem Zwischenraum zwischen der Führungsstange und dem Querträger eingeklemmt wird, ist an der Führungsstange eine Verkleidung befestigt, welche Seitenwandungen aufweist, die den Zwischenraum zwischen der Führungsstange und dem Querträger seitlich abdecken. Die Verbindung zwischen der Verkleidung und der Führungsstange dabei derart gestaltet, dass die Führungsstange und die Verkleidung über den gesamten Bewegungsbereich gemeinsam bewegt werden.

### AUFGABE DER ERFINDUNG

Der Erfindung liegt die Aufgabe zugrunde, einen Frontlader vorzuschlagen, der insbesondere hinsichtlich
- des Gewichts,
- der Abstützung der auf den Frontlader wirkenden Kräfte in den einzelnen Komponenten,
- der einsetzbaren Materialien für Teilfunktionen übernehmende Komponenten,
- der Reinigungs- und Wartungsmöglichkeiten und/oder
- des optischen Erscheinungsbilds
verbessert ist.

### LÖSUNG

Die Aufgabe der Erfindung wird erfindungsgemäß mit den Merkmalen des unabhängigen Patentanspruchs gelöst. Weitere bevorzugte erfindungsgemäße Ausgestaltungen sind den abhängigen Patentansprüchen zu entnehmen.

### BESCHREIBUNG DER ERFINDUNG

Die vorliegende Erfindung beruht insbesondere auf der Erkenntnis, dass eine Steuerstange, wie diese gemäß EP 1 799 917 B1 Einsatz findet, mit beträchtlichen Kräften beaufschlagt wird, welche im Bereich der endseitigen Schwenklager in die Steuerstange eingeleitet werden. Die beträchtlichen wirkenden Kräfte führen zu der Beaufschlagung der Steuerstange mit beträchtlichen Zug- oder Druckspannungen, einer Beaufschlagung auf Knickung und einer Beaufschlagung mit einem Biegemoment. Hierbei werden die Seitenschenkel des U-förmigen Querschnitts der Steuerstange gemäß EP 1 799 917 B1 ebenfalls stark beansprucht. Ein in der Steuerstange wirkendes Biegemoment hat dabei zur Folge, dass die freien Endbereiche der Seitenschenkel des U-förmige Querschnitts einen maximalen Abstand von einer neutralen Faser der Steuerstange aufweisen, womit diese dann maximal beansprucht sein können. Demgemäß setzt die Lösung gemäß EP 1 799 917 B1 eine hinreichend große Dimensionierung der Steuerstange und der Wandstärken des U-förmigen Querschnitts der Steuerstange voraus. Somit bedingt eine Gestaltung gemäß EP 1 799 917 B1
- eine hohe Masse der Steuerstange,
- eine Einschränkung des Materials für die Seitenschenkel des U-förmigen Profils auf feste oder hochfeste Materialien,
- eine Einschränkung der Wahl der Erstreckung der Seitenschenkel des U-förmigen Querschnitts,
- eine Einschränkung der einsetzbaren Profile für die Steuerstange und/oder
- eine Einschränkung der einsetzbaren Verfahren zur Herstellung der Steuerstange.

Erfindungsgemäß wird (abweichend zu der Druckschrift EP 1 799 917 B1) zwischen der Steuerstange und dem Arm ein Zwischenraum ausgebildet, der in eine Richtung vertikal zur Schwenkebene zunächst offen ist. Eine Schließung des Zwischenraums in diese Richtung erfolgt dann durch eine Verkleidung. Die Verkleidung ist separat von der Steuerstange ausgebildet, so dass auch die Herstellung, die Wahl der Fertigungsverfahren, die Wahl des Materials und die Wahl der Geometrie einerseits für die Verkleidung und andererseits für die Steuerstange unabhängig voneinander erfolgen kann.

Darüber hinaus kann erfindungsgemäß die Verkleidung in Richtung möglicher Verformungen der Steuerstange im Betrieb des Frontladers eine Relativbewegung zu der Steuerstange ausführen. Vorzugsweise ist ein Relativbewegung eines Endbereichs der Verkleidung gegenüber dem benachbarten Endbereich der Steuerstange möglich, während ein anderer Endbereich der Verkleidung durchaus gelenkig oder fest mit der Steuerstange, dem Umlenkhebel oder der Schlepper-Kopplungseinrichtung verbunden sein kann. Dies hat zur Folge, dass in Folge der erheblichen Beanspruchungen der Steuerstange auftretende Verformungen der Steuerstange nicht gleichermaßen zu einer Verformung der Verkleidung führen müssen, sondern vielmehr im Idealfall eine Verformung der Steuerstange erfolgen kann, ohne dass dieses zu einer Beaufschlagung der Verkleidung mit Kräften und hieraus resultierenden Verformungen der Verkleidung führt. Anders gesagt ist die erfindungsgemäße Verkleidung nicht mit Kräften beaufschlagt, die auf den Frontlader zum Abstützen und Halten des Werkzeugs wirken. Dies hat zur Folge, dass die Verkleidung nicht entsprechend den auf den Frontlader wirkenden Kräften dimensioniert werden muss, sondern lediglich so dimensioniert werden muss, dass diese die Zwecke der Verkleidung und der Schließung des Zwischenraums in eine Richtung vertikal zur Schwenkebene erfüllen kann.

Für die Gestaltung der Masse, des Flächenträgheitsmoments und/oder der Querschnittsfläche einerseits der Steuerstange und andererseits der Verkleidung gibt es im Rahmen der Erfindung vielfältige Möglichkeiten. Für einen Vorschlag der Erfindung beträgt die Masse, das Flächenträgheitsmoment und/oder die Querschnittsfläche der Verkleidung weniger als 10 % (beispielsweise sogar weniger als 5 % oder sogar 2 % oder 1 %) der Masse, des Flächenträgheitsmoments und/oder der Querschnittsfläche der Steuerstange, wobei dieses für das Flächenträgheitsmoment und/oder die Querschnittsfläche vorzugsweise
- für die Mitte in Richtung der Längserstreckung der Verkleidung und der Steuerstange,
- für einen mittigen Axialabschnitt der Verkleidung und der Steuerstange oder
- über die gesamte Längserstreckung der Verkleidung und der Steuerstange abseits der Schwenklager
gilt.

Auch für die Wahl der Materialien für die Verkleidung und die Steuerstange gibt es im Rahmen der Erfindung vielfältige Möglichkeiten. So können durchaus die Verkleidung und die Steuerstange aus demselben Material hergestellt sein. Für einen Vorschlag der Erfindung ist die Verkleidung aus einem anderen Material hergestellt als die Steuerstange, so dass gezielt ein optimales Material für die beiden genannten Komponenten verwendet werden kann. Um lediglich ein nicht beschränkendes Beispiel zu nennen, kann die Steuerstange aus Metall (beispielsweise Stahl, Gusseisen in den unterschiedlichen verfügbaren Zusammensetzungen und Festigkeiten) hergestellt sein, während die Verkleidung aus Kunststoff oder auch einem Faserverbundmaterial hergestellt sein kann. Alternativ oder zusätzlich kann die Verkleidung in einem anderen Fertigungsverfahren hergestellt sein als die Steuerstange. Um auch diesbezüglich ein nicht beschränkendes Beispiel zu nennen, kann für die Steuerstange ein gegossenes Profil oder ein Strangpressprofil eingesetzt werden, während die Verkleidung in einem Spritzgießverfahren insbesondere aus Kunststoff hergestellt ist.

Für die Gestaltung des Querschnitts der Verkleidung gibt es im Rahmen der Erfindung vielfältige Möglichkeiten. Für eine Variante der Erfindung weist die Verkleidung im Querschnitt einen oberen Querschenkel sowie zwei Seitenschenkel auf, wobei die Seitenschenkel beispielsweise
- parallel zueinander orientiert oder leicht in Richtung von dem oberen Querschenkel weg geöffnet ausgebildet sein können,
- gleiche oder unterschiedliche Längen aufweisen können und/oder
- geradlinig, abgeknickt oder kurvenförmig ausgebildet sein können.

In grober Näherung kann beispielsweise die Verkleidung einen Querschnitt entsprechend einem umgekehrten U aufweisen. Für diese Ausgestaltung ist der Querschenkel der Verkleidung oberhalb der Steuerstange angeordnet. Hingegen erstrecken sich die beiden Seitenschenkel auf unterschiedlichen Seiten der Steuerstange und des Arms nach unten, womit diese den Zwischenraum auf beiden Seiten abdecken.

Für eine andere Variante der Erfindung verfügt die Verkleidung im Querschnitt ebenfalls über einen Querschenkel und zwei Seitenschenkel. Allerdings erstrecken sich die Seitenschenkel von den zugeordneten Endbereichen des Querschenkels jeweils in unterschiedliche Richtungen, so dass sich ein Seitenschenkel nach oben erstreckt, während sich der andere Seitenschenkel nach unten erstreckt. In diesem Fall ist der Querschenkel in dem Zwischenraum zwischen der Steuerstange und dem Arm angeordnet. Hingegen erstreckt sich ein Seitenschenkel auf einer Seite und seitlich der Steuerstange nach oben, während sich der andere Seitenschenkel auf einer anderen Seite und seitlich des Arms nach unten erstreckt. In diesem Fall decken die Seitenschenkel auf unterschiedlichen Seiten unterschiedliche übereinander angeordnete Zwischenraumteile des Zwischenraums ab, die durch den Querschenkel voneinander getrennt sind. Für diese Ausgestaltung kann die Verkleidung eine Art Z-förmigen Querschnitt bilden, wobei die beiden parallelen (Seiten-) Schenkel des Z so auseinander gezogen sind, dass sich der verbindende (Quer-) Schenkel des Z vertikal zu den parallelen (Seiten-) Schenkeln erstreckt und der Einbau dieser Z-förmigen Verkleidung in liegender Ausrichtung des langgezogenen Z-förmigen Querschnitts erfolgt.

Eine Anbindung der Verkleidung an den Frontlader kann im Rahmen der Erfindung auf vielfältige Weise erfolgen. So kann beispielsweise die Verkleidung an dem Arm gehalten sein wobei diese aber dann derart bemessen ist, dass bei einer Veränderung der relativen Lage zwischen der Steuerstange und dem Arm die Steuerstange nicht mit der Verkleidung kollidiert. Für eine besondere Ausgestaltung der Erfindung ist die Verkleidung im Bereich des Schwenklagers, mit welchem die Steuerstange an der Schlepper-Kopplungseinrichtung gelagert ist, mit der Schlepper-Kopplungseinrichtung verbunden. Findet zur Ausbildung des Schwenklagers ein Schwenkbolzen Einsatz, kann dieser Schwenkbolzen sogar für eine Ausgestaltung der Erfindung multifunktional genutzt werden, indem dieser auch der Verbindung mit der Verkleidung dient. Alternativ oder zusätzlich kann die Verkleidung im Bereich des Schwenklagers, mit welchem die Steuerstange an dem Umlenkhebel gelagert ist, mit dem Umlenkhebel verbunden sein, wobei auch in diesem Fall eine entsprechende multifunktionale Nutzung eines Lagerbolzens für die Ausbildung des Schwenklagers erfolgen kann.

Möglich ist aber auch, dass die Verkleidung beabstandet von dem Schwenklager, mit welchem die Steuerstange an der Schlepper-Kopplungseinrichtung gelagert ist, mit der Schlepper-Kopplungseinrichtung verbunden ist und/oder die Verkleidung beabstandet von dem Schwenklager, mit welchem die Steuerstange an dem Umlenkhebel gelagert ist, mit dem Umlenkhebel verbunden ist. Durchaus möglich sind auch Mischformen der zuvor genannten Ausführungsbeispiele, so dass beispielsweise ein Endbereich der Verkleidung im Bereich eines multifunktionalen Schwenklagers für die Lagerung der Steuerstange an der Schlepper-Kopplungseinrichtung mit der Schlepper-Kopplungseinrichtung verbunden ist, während der andere Endbereich der Verkleidung beabstandet von dem Schwenklager, mit welchem die Steuerstange an dem Umlenkhebel gelagert ist, mit dem Umlenkhebel verbunden ist. Alternativ möglich ist, dass ein Endbereich der Verkleidung im Bereich eines multifunktionalen Schwenklagers für die Lagerung der Steuerstange an dem Umlenkhebel mit dem Umlenkhebel verbunden ist, während der andere Endbereich der Verkleidung beabstandet von dem Schwenklager, mit welchem die Steuerstange an der Schlepper-Kopplungseinrichtung gelagert ist, mit der Schlepper-Kopplungseinrichtung verbunden ist.

Wie zuvor erwähnt sind Relativbewegungen der Verkleidung gegenüber der Steuerstange möglich. Diese Relativbewegung kann gemäß einem Vorschlag der Erfindung dadurch gewährleistet werden, dass eine Verbindung der Verkleidung mit der Schlepper-Kopplungseinrichtung und/oder dem Umlenkhebel einen Längs-Freiheitsgrad aufweist. Hierbei ist die Länge des Längs-Freiheitsgrads vorzugsweise so groß wie oder größer als die möglichen Verformungen der Steuerstange während des Betriebs des Frontladers in Richtung des Längs-Freiheitsgrades. Eine Bereitstellung eines derartigen Längs-Freiheitsgrads kann auf beliebige Weise erfolgen, wobei hierzu vorzugsweise ein Langloch verwendet wird, dessen Länge die Länge des Längs-Freiheitsgrads vorgibt. Um lediglich ein Beispiel zu nennen, kann grundsätzlich eine Lagerung der Verkleidung über einen Lagerbolzen eines Schwenklagers der Steuerstange ohne Längs-Freiheitsgrad erfolgen, während ein Lagerbolzen eines anderen Schwenklagers der Steuerstange in einem Langloch der Verkleidung gelagert und geführt ist. Für eine Längenänderung der Steuerstange bewegt sich dann der Lagerbolzen des letztgenannten Schwenklagers entlang des Langloches, ohne dass die Verformung der Steuerstange zu der Beaufschlagung der Verkleidung mit in Längsrichtung wirkenden Kräften und Spannungen erfolgen kann.

Für einen weiteren Vorschlag der Erfindung ist die Verbindung der Verkleidung mit der Schlepper-Kopplungseinrichtung und/oder die Verbindung der Verkleidung mit dem Umlenkhebel lösbar, so dass die Verkleidung
- abnehmbar ist oder
- relativ zu der Steuerstange und/oder dem Arm in eine Öffnungsstellung verschwenkbar ist.

Das Abnehmen oder das Verschwenken der Verkleidung in die Öffnungsstellung kann genutzt werden, um einerseits den Zwischenraum zwischen der Steuerstange und dem Arm zu reinigen. Des Weiteren kann das Abnehmen der Verkleidung oder das Verschwenken der Verkleidung in die Öffnungsstellung genutzt werden, um Wartungs- oder Reparaturarbeiten an der Steuerstange, den beteiligten Schwenklagern oder weiteren Komponenten des Frontladers vorzunehmen. Die lösbare Verbindung der Verkleidung kann hierbei auf beliebige Weise erfolgen. Für einen besonderen einfachen Vorschlag ist die Verkleidung im Bereich der Verbindung mit der Schlepper-Kopplungseinrichtung oder mit dem Umlenkhebel nach unten offen, so dass diese in diesem Verbindungsbereich einfach angehoben werden kann und um das dann verbleibende Schwenklager in die Öffnungsstellung verschwenkt werden kann. Für diese einfache Ausgestaltung liegt die Verkleidung mit ihrem Eigengewicht dann auf der Schlepper-Kopplungseinrichtung oder dem Umlenkhebel oder einem Lagerbolzen eines zugeordneten Schwenklagers auf. Jede andere lösbare Verbindung der Verkleidung mit einer Rastverbindung, einem Schließriegel u. ä. ist aber auch im Rahmen der Erfindung möglich.

Für die Gestaltung des Querschnitts der Steuerstange gibt es im Rahmen der Erfindung grundsätzlich keine Einschränkungen. Für einen Vorschlag der Erfindung ist die Steuerstange als Kastenprofil ausgebildet mit einem Innenraum und einem randgeschlossenen Querschnitt.

Bei einer erfindungsgemäßen Ausführungsform verfügt die Verkleidung (die eine Frontlader-Teilverkleidung bildet)
- entweder über einen Querschnitt mit einem oberen Querschenkel sowie zwei Seitenschenkeln, wobei der Querschnitt einen nach unten offenen Aufnahmeraum ausbildet, in welchem ein oberer Teilabschnitt einer Steuerstange angeordnet werden kann (vgl. die obigen Ausführungen zu einem U-förmigen Querschnitt)
- oder über einen Querschnitt mit einem Querschenkel und zwei sich jeweils von einem Endbereich des Querschenkels in unterschiedliche Richtungen erstreckenden Seitenschenkeln, deren Abstand größer ist als die Breiten einer Steuerstange und eines Arms eines zugeordneten Frontladers (vgl. die obigen Ausführungen zu einem Querschnitt entsprechend einem langgezogenen liegenden Z).

Die Verkleidung weist einen Montagebereich für eine Schlepper-Kopplungseinrichtung auf, der in einem Endbereich der Frontlader-Teilverkleidung angeordnet ist, sowie einen Montagebereich für einen Umlenkhebel, der in dem anderen Endbereich der Frontlader-Teilverkleidung angeordnet ist. Einer der Montagebereiche weist eine Führung auf, die einen Längs-Freiheitsgrad gewährleistet, wobei es sich insbesondere um ein Langloch handelt.

Eine derartige Verkleidung kann zumindest teilweise oder auch vollständig aus einem beliebigen Kunststoffmaterial, beispielsweise in einem Spritzgießverfahren, hergestellt sein.

Hierbei kann im Rahmen der Erfindung der Querschnitt der Verkleidung derart dimensioniert sein und die Steifigkeit und die Zugfestigkeit der Verkleidung kann derart gewählt sein, dass die Verkleidung bei einer Beaufschlagung derselben mit den im Betrieb eines Frontladers auf eine Steuerstange und/oder einen Arm wirkenden Kräften versagen würde. Dieser Ausgestaltung liegt die erfindungsgemäße Erkenntnis zugrunde, dass gerade durch die erfindungsgemäße Ausgestaltung die Verkleidung nicht mit den im Betrieb eines Frontladers wirkenden Kräften beaufschlagt wird.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also von einem Element die Rede ist, ist dies so zu verstehen, dass genau ein Element, zwei Elemente oder mehr Elemente vorhanden ist/sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1 und 2**: zeigen in einer räumlichen Darstellung einen Frontlader gemäß dem Stand der Technik in unterschiedlichen Betriebsstellungen.
- **Fig. 3**: zeigt einen erfindungsgemäßen Frontlader mit einer Verkleidung in einer räumlichen Darstellung.
- **Fig. 4**: zeigt ein Detail des Frontladers gemäß Fig. 3 in einem Montagebereich einer Steuerstange und einer Verkleidung an einem Umlenkhebel.
- **Fig. 5**: zeigt einen Teilquerschnitt durch einen Frontlader gemäß Fig. 3 im Bereich eines Arms, einer Steuerstange und einer Verkleidung.
- **Fig. 6**: zeigt in einer Fig. 5 entsprechenden Darstellung einen Teilquerschnitt mit einer abweichenden Ausgestaltung einer Verkleidung.
- **Fig. 7**: zeigt in einer räumlichen Darstellung einen Teil eines Frontladers mit einer in eine Öffnungsstellung verschwenkten Verkleidung.
- **Fig. 8**: zeigt einen Teil eines Frontladers mit einer alternativen Ausgestaltung der Verkleidung und einer Verbindung der Verkleidung mit einer Schlepper-Kopplungseinrichtung und einem Umlenkhebel beabstandet von den zugeordneten Schwenklagern .

### FIGURENBESCHREIBUNG

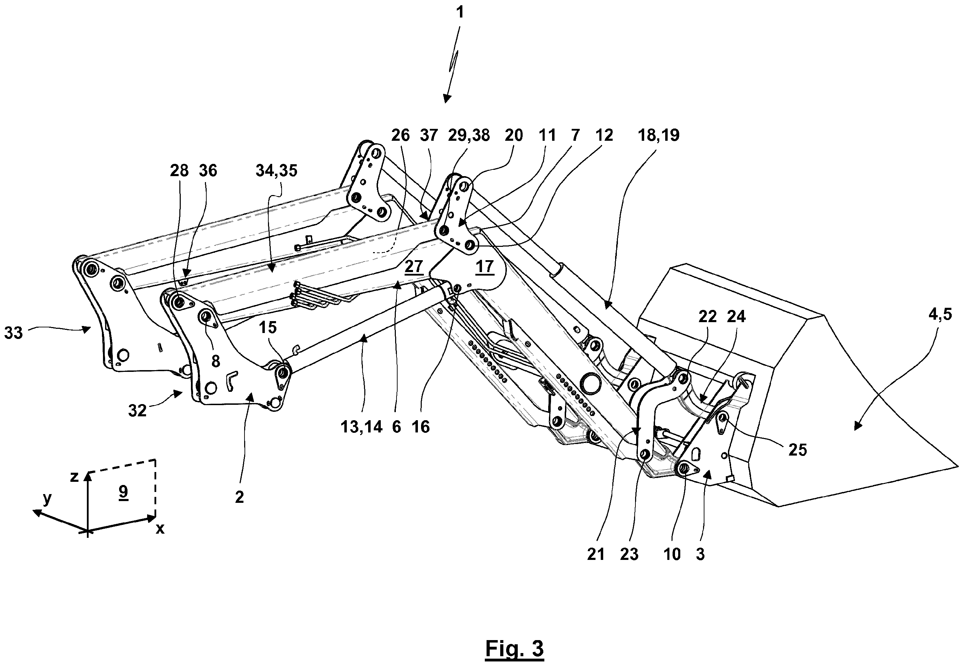

Für die erfindungsgemäßen Ausgestaltungen gemäß den **Fig. 3 bis 8** gilt zunächst das zu der Ausführungsform gemäß dem Stand der Technik, wie dieser in **Fig. 1** **und** **2** dargestellt ist und eingangs beschrieben worden ist, Gesagte entsprechend.

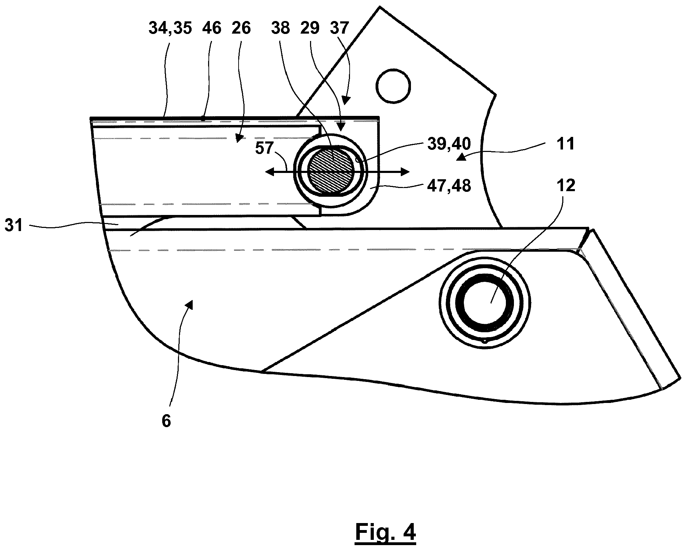

Gemäß Fig. 3 erstreckt sich die Steuerstange 26 im Inneren einer Verkleidung 34, die eine Frontlader-Teilverkleidung 35 bildet. Die Verkleidung 34 ist nicht Bestandteil der Tragstruktur 32, 33, da diese nicht mit den Kräften zum Halten des Werkzeugs 4 und den von den Aktuatoren 13, 18 hervorgerufenen Kräften beaufschlagt ist. Die Verkleidung 34 verfügt in einem Endbereich über einen Montagebereich 36, im Bereich dessen die Verkleidung 34 mit der Schlepper-Kopplungseinrichtung 2 verbunden ist. Für das dargestellte Ausführungsbeispiel erfolgt dies dadurch, dass sich ein Schwenkbolzen des Schwenklagers 28 durch ein Lagerauge des Montagebereichs 36 der Verkleidung 34 erstreckt, womit diese Verbindung eine Verschwenkung der Verkleidung 34 gegenüber der Schlepper-Kopplungseinrichtung 2 ermöglicht. In dem anderen Endbereich verfügt die Verkleidung 34 über einen Montagebereich 37, im Bereich dessen die Verkleidung 34 mit dem Umlenkhebel 11 verbunden ist. Für das dargestellte Ausführungsbeispiel erfolgt dies dadurch, dass sich ein Schwenkbolzen 38 des Schwenklagers 29 durch ein Lagerauge 39 des Montagebereichs 37 der Verkleidung 34 erstreckt. In dem Lagerauge 39 ist mit geringem Spiel oder spielfrei der Schwenkbolzen 38 in eine Richtung quer zur Längserstreckung der Steuerstange 26 und der Verkleidung 34 in der Schwenkebene 9 geführt. Somit unterbindet die Lagerung des Schwenkbolzens 38 in dem Lagerauge 39 eine Verschwenkung der Verkleidung 34 um das Schwenklager 28, so dass die Verkleidung 34 eine definierte Lage einnimmt. Das Lagerauge 39 ist für das dargestellte Ausführungsbeispiel (vgl. **Fig. 4**) als Langloch 40 ausgebildet, wobei die Längserstreckung des Langloches 40 koaxial zur Längsachse der Steuerstange 26 orientiert ist oder in Richtung möglicher Verformungen der Steuerstange 26 (vorzugsweise eine Längenänderung derselben) orientiert ist. Die Länge des Langloches 40 ist dabei derart gewählt, dass eine Verschiebung des Schwenkbolzens 38 in dem Lagerauge 39 entlang des Langlochs 40 in einem Ausmaß möglich ist, welcher der maximal in einem Betrieb des Frontladers bei den zulässigen Lasten hervorgerufenen Verformungen (insbesondere Längenänderung) der Steuerstange 26 entspricht.

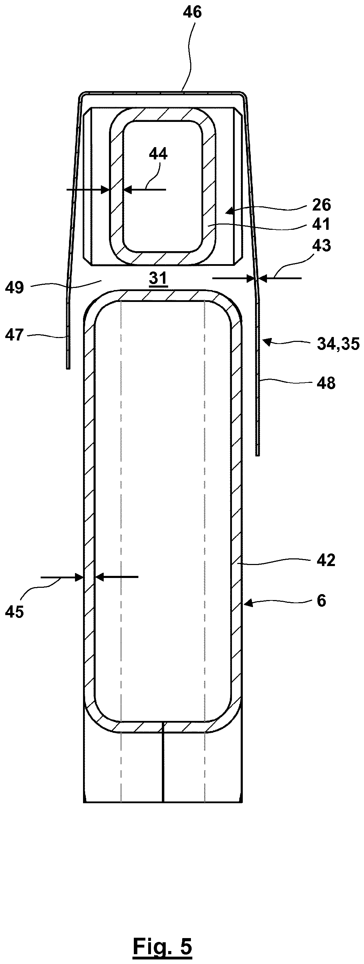

In dem Querschnitt gemäß **Fig. 5** ist zu erkennen, dass für das dargestellte Ausführungsbeispiel sowohl der Arm 6 als auch die Steuerstange 26 als Kastenprofile 41, 42 ausgebildet sind.

Eine Wandstärke 43 der Verkleidung ist um einen Faktor von mindestens 5, mindestens 7, mindestens 10 oder mindestens 15 kleiner als die Wandstärke 44 der Steuerstange 26 oder die Wandstärke 45 des Arms 6.

Die Verkleidung 34 verfügt in dem dargestellten Querschnitt über einen Querschenkel 46, der horizontal orientiert ist und mit einem geringen Abstand oberhalb der Steuerstange 26 angeordnet ist. Von den Endbereichen des Querschenkels 46 erstrecken sich Seitenschenkel 47, 48 nach unten, wobei sich diese Seitenschenkel 47, 48 auf unterschiedlichen Seiten über die gesamte Höhe der Steuerstange 26 erstrecken, auf beiden Seiten den Zwischenraum 31 zwischen der Steuerstange 26 und dem Arm 6 abdecken und sich mit in ihren freien Endbereichen noch seitlich auf unterschiedlichen Seiten des Arms 6 erstrecken. Möglich ist, dass wie dargestellt die Seitenschenkel 47, 48 unterschiedliche Längen aufweisen. In Fig. 3 ist zu erkennen, dass hierbei der kürzere Seitenschenkel 47 auf der Seite der Tragstruktur 32 (bzw. 33) angeordnet ist, die der anderen Tragstruktur 33 (bzw. 32) zugewandt ist. Darüber hinaus kann gemäß Fig. 3 die Längserstreckung der Seitenschenkel in Richtung eines mittigen Axialabschnitts der Verkleidung 34 zunehmen, wobei sogar auch möglich ist, dass in den Endbereichen die Seitenschenkel 47, 48 so kurz sind, dass diese den Zwischenraum 31 hier nicht oder nicht vollständig abdecken. Für das Ausführungsbeispiel gemäß Fig. 5 bilden der Querschenkel 46 und die Seitenschenkel 47, 48 einen Querschnitt entsprechend einen umgekehrten U, wobei auch möglich ist, dass sich der Abstand der Seitenschenkel 47, 48 mit zunehmender Entfernung von dem Querschenkel 46 vergrößert. Der Querschenkel 46 und die Seitenschenkel 47, 48 bilden einen Aufnahmeraum 49, in welchem die Steuerstange 26 vollständig angeordnet ist und in welchem der Arm 6 teilweise angeordnet ist.

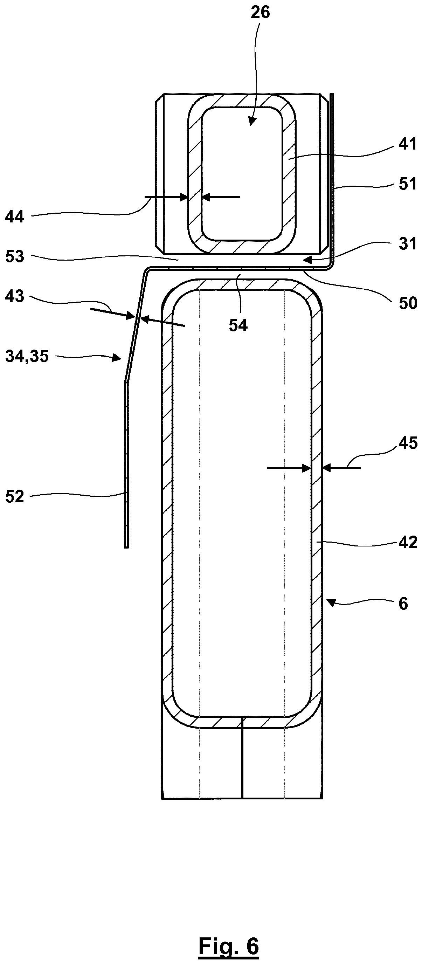

**Fig. 6** zeigt eine alternative Ausgestaltung einer Verkleidung 34. Auch für diese Ausgestaltung verfügt der Querschnitt der Verkleidung 34 über einen Querschenkel 50 sowie zwei Seitenschenkel 51, 52. In diesem Fall erstreckt sich aber der Seiteneschenkel 52 von einem Endbereich des Querschenkels 50 nach unten, während sich der andere Seitenschenkel 51 von dem anderen Endbereich des Querschenkels 50 nach oben erstreckt. Der Seitenschenkel 51 erstreckt sich hierbei seitlich auf einer Seite von der Steuerstange 26, während sich der Seitenschenkel 52 seitlich und auf der anderen Seite von dem Arm 6 erstreckt. Eine Abdeckung des Zwischenraums 31 zwischen der Steuerstange 26 und dem Arm erfolgt somit in einem oberen Zwischenraumteil 53 des Zwischenraums 31 auf einer Seite durch den Seitenschenkel 51, während dieses in dem anderen Zwischenraumteil 54 des Zwischenraums 31 auf der anderen Seite durch den Seitenschenkel 52 erfolgt. Der Zwischenraum 31 ist in diesem Fall durch den Querschenkel 50 in die beiden Zwischenraumteile 53, 54 unterteilt.

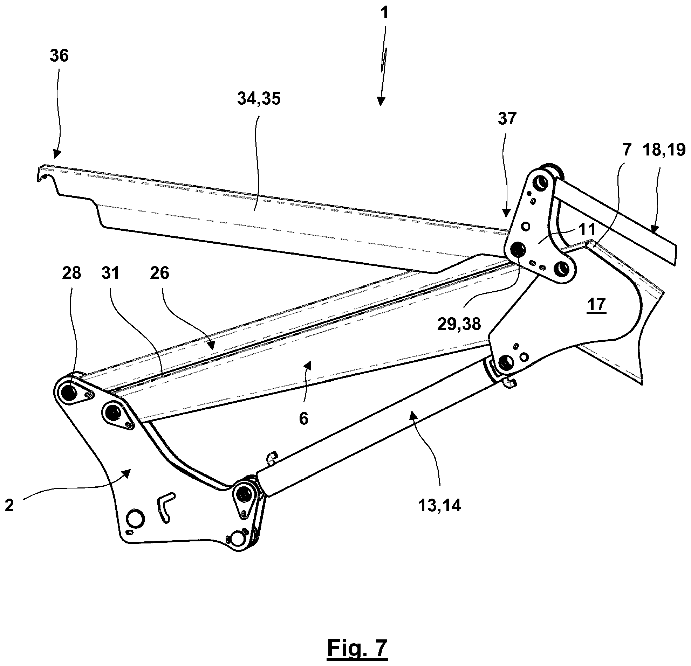

Für das in **Fig. 7** dargestellte Ausführungsbeispiel verfügt die Verkleidung 34 in dem Montagebereich 36 nicht über ein randgeschlossenes Lagerauge. Vielmehr ist der Montagebereich 36 hier nach unten offen, so dass die Verkleidung 34 hier lediglich mit ihrem Eigengewicht auf dem Schwenkbolzen des Schwenklagers 28 aufliegt. In diesem Fall kann das Lagerauge der Verkleidung 34 in dem Montagebereich 37 randgeschlossen und ohne Langloch ausgebildet sein. Für diese Ausgestaltung kann, wie in Fig. 7 dargestellt, die Verkleidung 34 in eine Öffnungsstellung aufgeklappt werden, in welcher die Steuerstange 26, der Arm 6 und auch der Zwischenraum 31 frei zugänglich sind für Wartungszwecke oder Reinigungsarbeiten.

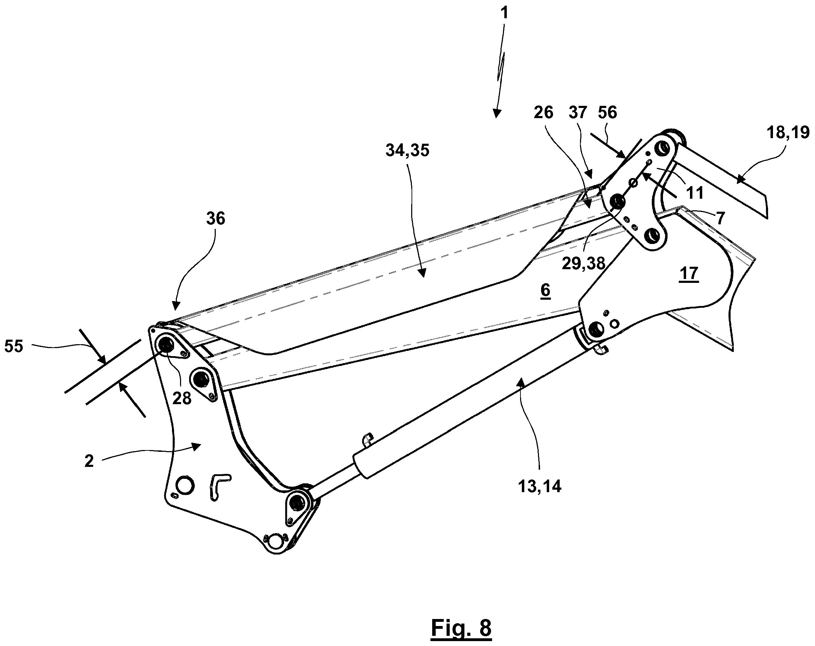

**Fig. 8** zeigt eine weitere modifizierte Ausführungsform, bei welcher nicht die Verbindung der Verkleidung 34 mit der Schlepper-Kopplungseinrichtung 2 und dem Umlenkhebel 11 im Bereich der Schwenklager 28, 29 erfolgt. Vielmehr erfolgt die Verbindung mit Abständen 55, 56 von den Schwenklagern 28, 29 durch eine geeignete Verbindungstechnik, wobei vorzugsweise auch hier die Montagebereiche 36, 37 der Verkleidung 34 mit einem Längs-Freiheitsgrad 57 ausgestattet sind.

Für die hier dargestellten Ausführungsbeispiele ist die Verkleidung 34 in einem Schwenklager 28, 29 der Steuerstange abgestützt (vgl. das Ausführungsbeispiel gemäß Fig. 3) oder die Verkleidung 34 ist an der Schlepper-Kopplungseinrichtung 2 und dem Umlenkhebel 11 abgestützt (vgl. das Ausführungsbeispiel gemäß Fig. 8). Im Rahmen der Erfindung kann aber durchaus auch ausschließlich oder mit einem von zwei oder mehreren Abstützpunkten eine Abstützung der Verkleidung 34 an der Steuerstange 26 oder sogar dem Arm 6 erfolgen, wobei dann auch für eine Ausführungsform eine Gewährleistung des Längs-Freiheitsgrads an dem Abstützpunkt an der Steuerstange 26 oder an dem Arm 6 erfolgen kann.

### BEZUGSZEICHENLISTE

- 1: Frontlader
- 2: Schlepper-Kopplungseinrichtung
- 3: Werkzeugträger
- 4: Werkzeug
- 5: Schaufel
- 6: Arm
- 7: Abwinklung
- 8: Schwenklager
- 9: Schwenkebene
- 10: Schwenklager
- 11: Umlenkhebel
- 12: Schwenklager
- 13: Aktuator
- 14: Hydraulikzylinder
- 15: Schwenklager
- 16: Schwenklager
- 17: Anlenkplatte
- 18: Aktuator
- 19: Hydraulikzylinder
- 20: Schwenklager
- 21: Schwinge
- 22: Schwenklager
- 23: Schwenklager
- 24: Koppelstange
- 25: Schwenklager
- 26: Steuerstange
- 27: Armteil
- 28: Schwenklager
- 29: Schwenklager
- 30: Schwenkrichtung
- 31: Zwischenraum
- 32: Tragstruktur
- 33: Tragstruktur
- 34: Verkleidung
- 35: Frontlader-Teilverkleidung
- 36: Montagebereich
- 37: Montagebereich
- 38: Schwenkbolzen
- 39: Lagerauge
- 40: Langloch
- 41: Kastenprofil
- 42: Kastenprofil
- 43: Wandstärke
- 44: Wandstärke
- 45: Wandstärke
- 46: Querschenkel
- 47: Seitenschenkel
- 48: Seitenschenkel
- 49: Aufnahmeraum
- 50: Querschenkel
- 51: Seitenschenkel
- 52: Seitenschenkel
- 53: Zwischenraumteil
- 54: Zwischenraumteil
- 55: Abstand
- 56: Abstand
- 57: Längs-Freiheitsgrad

## Patentansprüche

1. Frontlader (1) mit
a) einer Schlepper-Kopplungseinrichtung (2),
b) einem Werkzeugträger (3),
c) einem abgewinkelten Arm (6), welcher in einem Endbereich über ein Schwenklager (8) verschwenkbar in einer Schwenkebene (9) mit der Schlepper-Kopplungseinrichtung (2) verbunden ist und in einem anderen Endbereich über ein Schwenklager (10) verschwenkbar mit dem Werkzeugträger (3) verbunden ist,
d) einem Umlenkhebel (11), der über ein Schwenklager (12) verschwenkbar an dem Arm (6) abgestützt ist,
e) einem Aktuator (13), über welchen der Arm (6) relativ zu der Schlepper-Kopplungseinrichtung (2) verschwenkbar ist,
f) einem Aktuator (18), über welchen der Werkzeugträger (3) relativ zu dem Arm (6) verschwenkbar ist und der über ein Schwenklager (20) verschwenkbar an dem Umlenkhebel (11) abgestützt ist, und
g) einer Steuerstange (26), die über ein Schwenklager (28) verschwenkbar an der Schlepper-Kopplungseinrichtung (2) gelagert ist und über ein Schwenklager (29) verschwenkbar an dem Umlenkhebel (11) gelagert ist,
h) wobei eine Betätigung des Aktuators (13), über welchen der Arm (6) relativ zu der Schlepper-Kopplungseinrichtung (2) verschwenkbar ist, zu
ha) einer durch die Steuerstange (6) verursachten Verschwenkung des Umlenkhebels (11) gegenüber dem Arm (6) und
hb) einer hiermit einhergehenden Verschwenkung des Werkzeugträgers (3) gegenüber dem Arm (6)
führt, und
i) wobei sich eine Höhe eines Zwischenraums (31) zwischen der Steuerstange (26) und dem Arm (6) mit einer Betätigung des Aktuators (13), über welchen der Arm (6) relativ zu den Schlepper-Kopplungseinrichtung (2) verschwenkbar ist, verändert,
**dadurch gekennzeichnet, dass**
j) der Zwischenraum (31) in eine Richtung vertikal zur Schwenkebene (9) durch eine Verkleidung (34) geschlossen ist, welche separat von der Steuerstange (26) ausgebildet ist und in Richtung möglicher Verformungen der Steuerstange (26) im Betrieb des Frontladers (1) eine Relativbewegung zu der Steuerstange (26) ausführen kann.

2. Frontlader (1) nach Anspruch 1, **dadurch gekennzeichnet, dass**
a) eine Masse,
b) ein Flächenträgheitsmoment und/oder
c) eine Querschnittsfläche
der Verkleidung (34) weniger als 10% der Masse, des Flächenträgheitsmoments und/oder der Querschnittsfläche der Steuerstange (26) beträgt.

3. Frontlader (1) nach Anspruch 1 oder 2, **dadurch gekennzeichnet, dass** die Verkleidung (34)
a) aus einem anderen Material und/oder
b) in einem anderen Fertigungsverfahren
hergestellt ist als die Steuerstange (26).

4. Frontlader (1) nach einem der vorhergehenden Ansprüche, **dadurch gekennzeichnet, dass**
a) die Verkleidung (34) im Querschnitt einen oberen Querschenkel (46) sowie zwei Seitenschenkel (47, 48) aufweist,
b) der Querschenkel (46) des Querschnitts der Verkleidung (34) oberhalb der Steuerstange (26) angeordnet ist und
c) sich die beiden Seitenschenkel (47, 48) des Querschnitts der Verkleidung (34) auf unterschiedlichen Seiten der Steuerstange (26) und des Arms (6) nach unten erstrecken und den Zwischenraum (31) auf beiden Seiten abdecken.

5. Frontlader (1) nach einem der Ansprüche 1 bis 3, **dadurch gekennzeichnet, dass**
a) die Verkleidung (34) im Querschnitt einen Querschenkel (50) und zwei sich jeweils von einem Endbereich des Querschenkels (50) in unterschiedliche Richtungen erstreckende Seitenschenkel (51, 52) aufweist,
b) der Querschenkel (50) des Querschnitts der Verkleidung (34) in dem Zwischenraum (31) zwischen der Steuerstange (26) und dem Arm (6) angeordnet ist und
c) sich ein Seitenschenkel (51) des Querschnitts der Verkleidung (34) auf einer Seite und seitlich der Steuerstange (26) nach oben erstreckt und sich der andere Seitenschenkel (52) des Querschnitts der Verkleidung (34) auf einer anderen Seite und seitlich des Arms (6) nach unten erstreckt.

6. Frontlader (1) nach einem der vorhergehenden Ansprüche, **dadurch gekennzeichnet, dass** die Verkleidung (34)
a) im Bereich des Schwenklagers (28), mit welchem die Steuerstange (26) an der Schlepper-Kopplungseinrichtung (2) gelagert ist, mit der Schlepper-Kopplungseinrichtung (2) verbunden ist, und/oder
b) im Bereich des Schwenklagers (29), mit welchem die Steuerstange (26) an dem Umlenkhebel (11) gelagert ist, mit dem Umlenkhebel (11) verbunden ist.

7. Frontlader (1) nach einem der vorhergehenden Ansprüche, **dadurch gekennzeichnet, dass** die Verkleidung (34)
a) beabstandet von dem Schwenklager (28), mit welchem die Steuerstange (26) an der Schlepper-Kopplungseinrichtung (2) gelagert ist, mit der Schlepper-Kopplungseinrichtung (2) verbunden ist, und/oder
b) beabstandet von dem Schwenklager (29), mit welchem die Steuerstange (26) an dem Umlenkhebel (11) gelagert ist, mit dem Umlenkhebel (11) verbunden ist.

8. Frontlader (1) nach einem der vorhergehenden Ansprüche, **dadurch gekennzeichnet, dass** die Verbindung der Verkleidung (34)
a) mit der Schlepper-Kopplungseinrichtung (2) und/oder
b) mit dem Umlenkhebel (11)
einen Längs-Freiheitsgrad (57) aufweist.

9. Frontlader (1) nach einem der vorhergehenden Ansprüche, **dadurch gekennzeichnet, dass** die Verbindung der Verkleidung (34)
a) mit der Schlepper-Kopplungseinrichtung (2) und/oder
b) mit dem Umlenkhebel (11)
lösbar ist, womit die Verkleidung (34) abnehmbar ist oder relativ zu der Steuerstange (26) und/oder dem Arm (6) in eine Öffnungsstellung verschwenkbar ist.

10. Frontlader (1) nach einem der vorhergehenden Ansprüche, **dadurch gekennzeichnet, dass** die Steuerstange (26) als Kastenprofil (41) ausgebildet ist.

11. Frontlader (1) nach einem der vorhergehenden Ansprüche, **dadurch gekennzeichnet, dass** die Verkleidung (34) aufweist
a) einen Querschnitt mit einem oberen Querschenkel (46) sowie zwei Seitenschenkeln (47, 48), der einen nach unten offenen Aufnahmeraum (49) ausbildet, in welchem die Steuerstange (26) und teilweise ein Arm (6) angeordnet ist, oder einen Querschnitt mit einem Querschenkel (50) und zwei sich jeweils von einem Endbereich des Querschenkels (50) in unterschiedliche Richtungen erstreckenden Seitenschenkeln (51, 52), deren Abstand größer ist als die Breiten einer Steuerstange (26) und eines Armes (6) eines zugeordneten Frontladers (1),
b) einen in einem Endbereich angeordneten Montagebereich (36) für eine Schlepper-Kopplungseinrichtung (2) und einen in einem anderen Endbereich angeordneten Montagebereich (37) für einen Umlenkhebel (11),
c) wobei ein Montagebereich (37) eine einen Längs-Freiheitsgrad (57) gewährleistende Führung aufweist.

12. Frontlader (1) nach Anspruch 11, **dadurch gekennzeichnet, dass** die Verkleidung (34) teilweise oder vollständig aus Kunststoff hergestellt ist.

13. Frontlader (1) nach Anspruch 11 oder 12, **dadurch gekennzeichnet, dass** der Querschnitt der Verkleidung (34) derart dimensioniert ist und die Steifigkeit und Zugfestigkeit der Verkleidung (34) derart gewählt sind, dass die Verkleidung (34) bei einer Beaufschlagung derselben mit den im Betrieb des Frontladers auf die Steuerstange (26) und/oder den Arm (6) des Frontladers (1) wirkenden Kräften versagen würde.

## Claims

1. Front loader (1) comprising
a) a tractor coupling device (2),
b) an implement carrier (3),
c) an angled arm (6), an end region of the arm (6) being connected for being pivoted in a pivot plane (9) to the tractor coupling device (2) by a pivot bearing (8) and another end region of the arm (6) being connected for being pivoted to the implement carrier (3) by a pivot bearing (10),
d) a deflection lever (11) which is supported for being pivoted at the arm (6) by a pivot bearing (12),
e) an actuator (13) by which it is possible to pivot the arm (6) relative to the tractor coupling device (2),
f) an actuator (18) by which it is possible to pivot the implement carrier (3) relative to the arm (6) and which is supported for being pivoted at the deflection lever (11) by a pivot bearing (20) and
g) a control rod (26) which is supported for being pivoted at the tractor coupling device (2) by a pivot bearing (28) and which is supported for being pivoted at the deflection lever (11) by a pivot bearing (29),
h) an actuation of the actuator (13) by which it is possible to pivot the arm (6) relative to the tractor coupling device (2) results in
ha) a pivoting movement of the deflection lever (11) relative to the arm (6) caused by the control rod (6) and
hb) a simultaneous pivoting movement of the implement carrier (3) relative to the arm (6)
and
i) a height of an intermediate space (31) between the control rod (26) and the arm (6) changing with the actuation of the actuator (13) by which it is possible to pivot the arm (6) relative to the tractor coupling device (2),
**characterised in that**
j) the intermediate space (31) is closed in a direction vertical to the pivot plane (9) by a cover (34) which is separate from the control rod (26) and which is able to perform a movement relative to the control rod (26) in the direction of possible deformations of the control rod (26) during the operation of the front loader (1).

2. Front loader (1) of claim 1, **characterised in that**
a) a mass,
b) a geometrical moment of inertia and/or
c) a cross-sectional area
of the cover (34) is smaller than 10 % of the mass, the geometrical moment of inertia and/or the cross-sectional area of the control rod (26).

3. Front loader (1) of claim 1 or 2, **characterised in that** the cover (34) is
a) made of another material and/or
b) manufactured in a different manufacturing process
than the control rod (26).

4. Front loader (1) of one of the preceding claims, **characterised in that**
a) the cover (34) comprises a cross-section with an upper transverse leg (46) and two side legs (47, 48),
b) the transverse leg (46) of the cross-section of the cover (34) is arranged above the control rod (26) and
c) the two side legs (47, 48) of the cross-section of the cover (34) extend on different sides of the control rod (26) and of the arm (6) in downward direction and cover the intermediate space (31) on both sides.

5. Front loader (1) of one of claims 1 to 3, **characterised in that**
a) the cover (34) in the cross-section comprises a transverse leg (50) and two side legs (51, 52) each extending from one end region of the transverse leg (50) in opposite directions,
b) the transverse leg (50) of the cross-section of the cover (34) being arranged in the intermediate space (31) between the control rod (26) and the arm (6) and
c) one of the side legs (51) of the cross-section of the cover (34) extends on one side and laterally from the control rod (26) in upward direction and the other side leg (52) of the cross-section of the cover (34 extends on the other side and laterally from the arm (6) in downward direction.

6. Front loader (1) of one of the preceding claims, **characterised in that** the cover (34)
a) is connected to the tractor coupling device (2) in the region of the pivot bearing (28) by which the control rod (26) is supported for being pivoted at the tractor coupling device (2) and/or
b) is connected to the deflection lever (11) in the region of the pivot bearing (29) by which the control rod (26) is supported for being pivoted at the deflection lever (11).

7. Front loader (1) of one of the preceding claims, **characterised in that** the cover (34)
a) is connected to the tractor coupling device (2) remote from the pivot bearing (28) by which the control rod (26) is supported at the tractor coupling device (2) and/or
b) is connected to the deflection lever (11) remote from the pivot bearing (29) by which the control rod (26) is supported at the deflection lever (11).

8. Front loader (1) of one of the preceding claims, **characterised in that** the connection of the cover (34)
a) to the tractor coupling device (2) and/or
b) to the deflection lever (11)
comprises a longitudinal degree of freedom (57).

9. Front loader (1) of one of the preceding claims, **characterised in that** the connection of the cover (34)
a) to the tractor coupling device (2) and/or
b) to the deflection lever (11)
is releasable such that it is possible to remove the cover (34) or to pivot the cover (34) relative to the control rod (26) and/or relative to the arm (6) into an open position.

10. Front loader (1) of one of the preceding claims, **characterised in that** the control rod (26) forms a box section (41).

11. Front loader (1) of one of the preceding claims, **characterised in that** the cover (34) comprises
a) a cross-section with an upper transverse leg (46) and two side legs (47, 48), the cross-section forming an accommodation space (49) being open in downward direction, the control rod (26) and partially an arm (6) being arranged in the accommodation space (49), or a cross-section with a transverse leg (50) and two side legs (51, 52) each extending from an end region of the transverse leg (50) in opposite directions, the distance of the side legs (51, 52) being larger than the widths of a control rod (26) and of an arm (6) of an associated front loader (1),
b) an assembly region (36) for a tractor coupling device (2) being arranged in one end region and an assembly region (37) for a deflection lever (11) being arranged in the other end region,
c) an assembly region (37) comprising a guide providing a longitudinal degree of freedom (57).

12. Front loader (1) of claim 11, **characterised in that** the cover (34) is partially or completely made of plastic.

13. Front loader (1) of claim 11 or 12, **characterised in that** the cross-section of the cover (34) is dimensioned such that and the stiffness and the tensile strength of the cover (34) are chosen such that the cover (34) would fail when being biased with the forces being effective at the control rod (26) and/or the arm (6) of the front loader (1) during the operation of the front loader.

## Revendications

1. Chargeur frontal (1) avec
a) un dispositif de couplage de tracteur (2),
b) un porte-outil (3),
c) un bras coudé (6) qui peut être relié de manière pivotante dans une partie d'extrémité par l'intermédiaire d'un palier de pivotement (8) dans un plan de pivotement (9) avec le dispositif de couplage de tracteur (2) et relié, dans une autre partie d'extrémité, de manière pivotante par l'intermédiaire d'un palier de pivotement (10) avec le porte-outil (3),
d) un levier de renvoi (11) qui est appuyé de manière pivotante par l'intermédiaire d'un palier de pivotement (12) contre le bras (6),
e) un actionneur (13), par l'intermédiaire duquel le bras (6) peut être pivoté par rapport au dispositif de couplage de tracteur (2),
f) un actionneur (18), par l'intermédiaire duquel le porte-outil (3) peut être pivoté par rapport au bras (6) et qui est appuyé, par l'intermédiaire d'un palier de pivotement (20), de manière pivotante contre le levier de renvoi (11) et
g) une tringle de commande (26) qui est logée de manière pivotante, par l'intermédiaire d'un palier de pivotement (28), sur le dispositif de couplage de tracteur (2) et qui est logé de manière pivotante, par l'intermédiaire d'un palier de pivotement (29), sur le levier de renvoi (11),
h) un actionnement de l'actionneur (13), par l'intermédiaire duquel le bras (6) peut être pivoté par rapport au dispositif de coulage de tracteur (2) conduisant à
ha) un pivotement du levier de renvoi (11) par rapport au bras (6), provoqué par la tringle de commande (26) et
hb) un pivotement du porte-outil (3) par rapport au bras (6),
et
i) une hauteur d'un espace intermédiaire (31) entre la tringle de commande (26) et le bras (6) variant avec un actionnement de l'actionneur (13), par l'intermédiaire duquel le bras (6) peut être pivoté par rapport au dispositif de couplage de tracteur (2),
**caractérisé en ce que**
j) l'espace intermédiaire (31) est fermé, dans une direction verticale par rapport au plan de pivotement (9), par un carénage (34), qui est réalisé séparément de la tringle de commande (26) et peut effectuer, dans la direction de possibles déformations de la tringle de commande (26), lors du fonctionnement du chargeur frontal (1), un mouvement relatif par rapport à la tringle de commande (26).

2. Chargeur frontal (1) selon la revendication 1, **caractérisé en ce que**
a) une masse,
b) un moment d'inertie surfacique et/ou
c) une surface de section transversale
du carénage (34) est inférieur à 10 % de la masse, du moment d'inertie surfacique et/ou de la surface de section transversale de la tringle de commande (26).

3. Chargeur frontal (1) selon la revendication 1 ou 2, **caractérisé en ce que** le carénage (34) est constitué
a) est constitué d'un matériau différent et/ou
b) est fabriqué à l'aide procédé de fabrication différent
de la tringle de commande (26).

4. Chargeur frontal (1) selon l'une des revendications précédentes, **caractérisé en ce que**
a) le carénage (34) présente, dans la section transversale, une branche transversale supérieure (46) ainsi que des branches latérales (47, 48),
b) la branche transversale (46) de la section transversale du carénage (34) est disposée au-dessus de la tringle de commande (26) et
c) les deux branches latérales (47, 48) de la section transversale du carénage (34) s'étendent sur différents côtés de la tringle de commande (26) et du bras (6) vers le bas et recouvrent l'espace intermédiaire (31) des deux côtés.

5. Chargeur frontal (1) selon l'une des revendications 1 à 3, **caractérisé en ce que**
a) le carénage (34) présente, dans la section transversale, une branche transversale (50) et deux branches latérales (51, 52) s'étendant chacune d'une partie d'extrémité de la branche transversale (50) dans des directions différentes,
b) la branche transversale (50) de la section transversale du carénage (34) est disposée dans l'espace intermédiaire (31) entre la tringle de commande (26) et le bras (6) et
c) une branche latérale (51) de la section transversale du carénage (34) s'étend sur un côté et latéralement par rapport à la tringle de commande (26) vers le haut et l'autre branche latérale (52) de la section transversale du carénage (34) s'étend sur un autre côté et latéralement par rapport au bras (6) vers le bas.

6. Chargeur frontal (1) selon l'une des revendications précédentes, **caractérisé en ce que** le carénage (34)
a) est relié avec le dispositif de couplage de tracteur (2) au niveau du palier de pivotement (28) avec lequel la tringle de commande (26) est logée sur le dispositif de couplage de tracteur (2), et/ou
b) est relié avec le levier de renvoi (11) au niveau du palier de pivotement (29) avec lequel la tringle de commande (26) est logée sur le levier de renvoi (11).

7. Chargeur frontal (1) selon l'une des revendications précédentes, **caractérisé en ce que** le carénage (34)
a) est relié avec le dispositif de couplage de tracteur (2) à une certaine distance du palier de pivotement (28) avec lequel la tringle de commande (26) est logée sur le dispositif de couplage de tracteur (2) et/ou
b) est relié avec le levier de renvoi (11) à une certaine distance du palier de pivotement (29) avec lequel la tringle de commande (26) est logé sur le levier de renvoi (11).

8. Chargeur frontal (1) selon l'une des revendications précédentes, **caractérisé en ce que** la liaison du carénage (34)
a) avec le dispositif de couplage de tracteur (2) et/ou
b) avec le levier de renvoi (11)
comprend un degré de liberté longitudinal (57).

9. Chargeur frontal (1) selon l'une des revendications précédentes, **caractérisé en ce que** la liaison du carénage (34)
a) avec le dispositif de couplage de tracteur (2) et/ou
b) avec le levier de renvoi (11)
est détachable, le carénage (34) étant ainsi amovible ou pouvant être pivoté par rapport à la tringle de commande (26) et/ou au bras (6) vers une position d'ouverture.

10. Chargeur frontal (1) selon l'une des revendications précédentes, **caractérisé en ce que** la tringle de commande (26) est conçue comme un profilé en caisson (41).

11. Chargeur frontal (1) selon l'une des revendications précédentes, **caractérisé en ce que** le carénage (34) comprend
a) une section transversale, avec une branche transversale supérieure (46) ainsi que deux branches latérales (47, 48), qui forme un espace de logement (49) ouvert vers le bas, dans lequel la tringle de commande (26) et, de manière partielle, un bras (6), sont disposés, ou une section transversale avec une branche transversale (50) et deux branches latérales (51, 52) s'étendant chacune d'une zone d'extrémité de la branche transversale (50) dans des directions différentes, dont la distance est supérieure aux largeurs d'une tringle de commande (26) et du bras (6) d'un chargeur frontal (1) correspondant,
b) une zone de montage (36) disposée dans une zone d'extrémité pour un dispositif de couplage de tracteur (2) et une zone de montage (37) pour un levier de renvoi (11), disposé dans une autre zone d'extrémité,
c) une zone de montage (37) présentant un guidage garantissant un degré de liberté longitudinal (57).

12. Chargeur frontal (1) selon la revendication 11, **caractérisé en ce que** le carénage (34) est constitué partiellement ou entièrement de matière plastique.

13. Chargeur frontal (1) selon la revendication 11 ou 12, **caractérisé en ce que** la section transversale du carénage (34) est dimensionnée de façon à ce que la rigidité et la résistance à la traction du carénage (34) soit choisie de façon à ce que le carénage (34) défaillirait lors d'une sollicitation de celui-ci avec les forces s'exerçant, lors du fonctionnement du chargeur frontal, sur la tringle de commande (26) et/ou le bras (6) du chargeur frontal (1).
